## Europäisches Patentamt
## European Patent Office
## Office européen des brevets

(11) Veröffentlichungsnummer: **0 114 967**
**B1**

(12) # EUROPÄISCHE PATENTSCHRIFT

(45) Veröffentlichungstag der Patentschrift:
04.02.87

(51) Int. Cl.⁴: **B 01 D 53/18**, B 01 D 19/00

(21) Anmeldenummer: 83111781.7

(22) Anmeldetag: 24.11.83

(54) Verfahren zur Desorption eines schwerlösbaren Gases aus einer Flüssigkeit.

(30) Priorität: 25.11.82 HU 378482

(43) Veröffentlichungstag der Anmeldung:
08.08.84 Patentblatt 84/32

(45) Bekanntmachung des Hinweises auf die Patenterteilung:
04.02.87 Patentblatt 87/6

(84) Benannte Vertragsstaaten:
AT BE CH DE FR GB IT LI LU NL SE

(56) Entgegenhaltungen:
GB-A-1 421 421
US-A-2 253 261
US-A-2 431 455
US-A-3 122 594
US-A-3 219 324

CHEMICAL ENGINEERING, 14. Dezember 1959, New York, C.C. VAN SOYE "New floating-bed scrubber won't plug", Seiten 106, 108

(73) Patentinhaber: BUDAPESTI MÜSZAKI EGYETEM, 3/9, Müegyetem rakpart, H-1111 Budapest XI (HU)
Patentinhaber: "Aprilis 4" Gépipari Müvek, Csanyi u. 2, Kiskunfélegyháza (HU)

(72) Erfinder: Szentgyörgyi, Sándor Dr., Dipl. Maschinening., Keleti Károly u. 27, H-1024 Budapest (HU)
Erfinder: Molnar, Károly Dr., Dipl. Maschinening., Vöröstorony u. 33/b, H-1025 Budapest (HU)
Erfinder: Szabo, Lajos Dipl. Maschinening., Kiss János U. 30, H-1183 Budapest (HU)
Erfinder: Almadi, József, Dipl. Maschinening., Berkenye u. 4, H-1025 Budapest (HU)

(74) Vertreter: Patentanwälte Viering & Jentschura, Steinsdorfstrasse 6, D-8000 München 22 (DE)

EP 0 114 967 B1

## Beschreibung

Die Erfindung betrifft ein Verfahren zur Desorption von schwerlösbaren Gasen aus einer Flüssigkeit. Das Verfahren wird in einer Gegenstromkolonne durchgeführt, in die an dem einen Ende Gas, an dem anderen Ende die Flüssigkeit eingeführt wird. Das Gas und die Flüssigkeit werden über Verteiler in die Kolonne eingeführt, während die Flüssigkeit über einen Flüssigkeitsverschluß abgeführt wird.

In der Industrie besteht oft die Aufgabe, die in einer Füssigkeit enthaltene Gaskomponente auszutreiben.

Es ist eine wohlbekannte Tatsache, daß die Lösbarkeit einzelner Gase bei demselben Druck und der gleichen Temperatur weitgehend unterschiedlich ist. Diese Erscheinung ermöglicht die Trennung der Gase von Flüssigkeiten im Sinne der gestellten Aufgabe. In den üblichen Füllkörpersäulen, in den Berieselungskolonnen, wird die erzeugte disperse Flüssigkeitsphase als Film oder als Tropfen ausgebreitet. Die Stoffübergabe zwischen der Gas- und Flüssigkeitsphase findet an der Grenzfläche der beiden Phasen durch Diffusion statt, wobei die intensität von der Diffusionsgeschwindigkeit abhängt.

An der Grenzfläche der dispersen Phasen ist die diffundierende komponente in einer Gleichgewichtskonzentration vorhanden. Die Diffusionsgeschwindigkeit ist in einer Phase umso höher, je größer der Unterschied der Konzentration der diffundierenden Komponente in der Hauptmasse und an der Grenzfläche ist, d.h. je größer die Triebkraft ist.

Bei den in der Flüssigkeitsphase schwerlösbaren Gasen (wie z.B. $CO_2$, $O_2$, Luft usw.) ist - wenn die Gase einmal gelöst sind - die Triebkraft ziemlich gering; in diesen Fällen wird die Geschwindigkeit der Diffusion zwischen den Phasen durch die in dem Flüssigkeitsfilm vorhandene geringe Triebkraft beschränkt.

Eine größere, die Phase begrenzende Fläche sowie ein größerer Stoffübergabefaktor üben einen den Zuwachs der Diffusionsgeschwindigkeit fördernden Einfluß aus.

Die Höhe der Desorptionskolonnen und dadurch die Investitionskosten bei einer gegebenen Aufgabe werden durch die Diffusionsgeschwindigkeit bestimmt. Aufgrund des Gesagten kann die Geschwindigkeit durch die Vergrößerung der Phasengrenzflächen und/oder die Erhöhung der Diffusionsfaktoren erhöht werden.

Die eine disperse Flüssigkeitsphase in traditioneller Weise erzeugenden Füllkörpersäulen (z.B. Rasching-Füllung, Berl-Sattel oder Intalox-Sattel) ergeben große Phasengrenzflächen; die Zerstäubungsvorrichtrungen ergeben aber noch größere. Diese hingegen verbessern die Stoffübergabefaktoren an der Flüssigkeitsseite nur in geringem Maße, da sich an der Oberfläche der Füllkörper ein laminarer Flüssigkeitsfilm ausgestaltet. Als Erfolg findet in der Flüssigkeitsphase überwiegend eine molelulare Diffusion statt, die einen ziemlich langsamen Prozeß darstellt. In derartigen herkömmlichen Fällen, in denen die Diffusionsgeschwindigkeit von den Verhältnissen (dem Widerstand) des Flüssigkeitsfilms geregelt wird, würde die Erzeugung einer turbulenten Diffusion - zwecks Förderung der Stoffübergabe - einen Fortschritt bedeuten.

Man kann über eine turbulente Diffusion sprechen, wenn anstatt der Moleküle aus hochzahligen Molekülen bestehende Molekülgruppen von der Phasengrenzfläche in die Hauptmasse überführt werden. Das gesetzte Ziel kann durch die Zerstückelung der Phasengrenzfläche, die intensive Vermischung zwischen der Phase und der Hauptmasse, durch die ständige Erneuerung der Grenzfläche, kurz gesagt, durch die Erzeugung einer turbulenten Diffusion erreicht werden.

Zur Annäherung des gesetzten Ziels dienen bisher Füllkörper spezieller Formen (z.B. die Telerette-Füllung). Diese sind in der Mehrzahl der Fälle großflächige, vielkantige, in der Regel durchbrochene körper, bei denen die Flüssigkeit von den kanten in Tropfen zerlegt werden. Die Tropfen stoßen aneinander und an die Flächen der Füllkörper, die die Flüssigkeits phase wiederholt zerstückeln und die Phasengrenzfläche erneuern, wodurch der Stoffübergabefaktor an der Flüssigkeitsseite verbessert wird.

Durch die Anwendung neuer Füllkörper von speziellem Format kann die turbulente Diffusion nicht wesentlich erhöht werden; dabei sind die Produktionskosten derartiger Füllkörper hoch.

Der Erfindung wurde demnach das Ziel gesetzt, ein Verfahren zu schaffen, mit welchem die Abscheidung eines schwerlösbaren Gases aus einer Flüssigkeit mit einer erhöhten Wirksamkeit durchgeführt werden kann. Eine weitere Forderung besteht darin, daß die Belastbarkeit der Vorrichtung zwischen weiten Grenzen geändert werden können soll, ohne die Betriebskosten bedeutend erhöhen zu müssen.

Die Erfindung beruht auf der Erkenntnis, daß zwecks Förderung der Stoffübergabe bei der Gasdesorption aus der Flüssigkeit die turbulente Diffusion erhöht werden muß, und zwar in der Weise, daß mit Hilfe von durch einen Gasstrom intensiv bewegten, fluidisierten Füllkörpern die Oberfläche ständig vergrößert, die Fläche wiederholt und rasch erneuert und die Flüssigkeitsphase mit dem Gasstrom vermischt wird.

Demnach bezieht sich die Erfindung auf ein Verfahren zur Desorption eines schwerlösbaren Gases aus einer Flüssigkeit, bei welchem in einer Gegenstromkolonne die zu entgasende Flüssigkeit von oben her auf eine Füllung aus diskreten Füllkörpern verteilt wird, die mittels eines Gasstromes, der von unterhalb der Füllung her zugeführt wird, fluidisiert gehalten wird, wobei in der Füllung mehrere unterschiedliche fluidisierte Füllkörperschichten ausgebildet werden, deren gegenseitige Rückmischung entweder durch Trenngitter oder durch Ausbildung der Füllkörperschichten aus fluidisierbaren Füllkörpern unterschiedlicher Dichte und/oder Dimension verhindert wird.

Bei einer vorteilhaften Ausführungsform weisen, die die Füllung bildenden diskreten Füllkörper die Gestalt eines Prismas, eines Zylinders oder einer kugel auf. Eine weitere vorteilhafte Ausführungsform kann dadurch gekennzeichnet werden, daß der Flüssigkeit ein oberflächenaktives Benetzungsmittel zugeführt wird.

Es ist ein Verfahren zum Stoffaustausch zwischen einem Gas und einer Flüssigkeit bekannt (US-A-2431455), bei welchem in einer Gegenstromkolonne die Flüssigkeit von oben her auf eine Füllung aus diskreten Füllkörpern verteilt wird, die mittels des Gasstromes, der von unterhalb der Füllung her zugeführt wird, im fluidisierten Zustand gehalten wird, wobei die Flüssigkeit ein Benetzungsmittel enthalten kann. Dieses bekannte Verfahren dient jedoch dem Waschen des Gases mit der Flüssigkeit zur Staubabscheidung, zum Absorbieren vom Gasbestandteilen und zum Durchführen chemischer Reaktionen zwischen der Flüssigkeit und dem Gas oder darin enthaltenen Feststoffpartikeln, dient daher bei einem Stoffaustausch zwischen der Flüssigkeit und dem Gasstrom dem Ubergang von der Gas in die Flüssigkeitsphase. Demgegenüber bezieht sich die Erfindung umgekehrt auf den Ubergang von der Flüssigkeits in die Gasphase im Sinne einer Entgasung der Flüssigkeit mithilfe eines die Füllkörper fluidisierenden äußeren Gasstromes.

Bei einem anderem bekannten Verfahren (US-A-3122594) können in einer Gegenstromkolonne, in welcher eine Flüssigkeit von oben her auf eine Füllung aus diskreten Füllkörpern verteilt wird, die aus Kugeln unterschiedlichen Durchmessers und/oder unterschiedlicher Dichte bestehen können und die von einem von unten zugeführten Gasstrom durchwirbelt werden, mehrere durch Trenngitter voneinander getrennte Füllkörperschichten vorhanden sein. Aber auch hier geht es nicht um eine Desorption, sondern um eine Absorption der Gasphase in der Flüssigkeitsphase und außerdem werden die Füllkörper nicht fluidisiert, sondern flotiert, indem die Füllkörper spezifisch leichter als die Flüssigkeit sind, so daß sie in der Flüssigkeit aufschwimmen können.

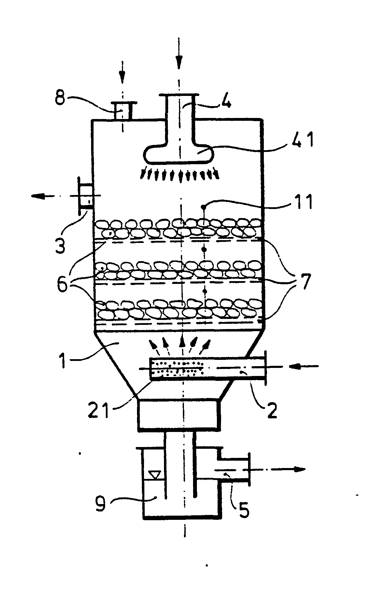

Die Erfindung wird anhand der Zeichnung näher erläutert, die die schematische Anordnung einer Gegenstromkolonne zur Durchführung des erfindungsgemäßen Desorptionsverfahrens darstellt.

Wie bei bekannten Anlagen zum Waschen von Gasen sind an einer kolonne 1 ein Gaseintrittsstutzen 2, ein Flüssigkeitseintrittsstutzen 4, ein Gasverteiler 21, ein Flüssigkeitsverteiler 41, ein Gasaustrittsstutzen 3 und ein mit einem Flüssigkeitsverschluß 9 versehener Flüssigkeitsabfluß 5 angeordnet. In einem inneren Mischraum 11 der Anlage ist eine Füllung 6 angeordnet, die ggf. mit Gittern 7 in Lagen unterteilt, in Schichten gegliedert ist.

Die Wirkungsweise ist für eine Desorption von schwerlösbaren Gasen wie folgt:

Die über den Gaseintrittstutzen 2 eintretende, aus dem Gasverteiler 21 nach oben strömende, die Desorption durchführende Gaskomponente setzt die Füllung 6 in eine intensive Bewegung und bringt sie in dem Mischraum 11 in einen fluidisierten Zustand.

Die über den Flüssigkeitseintrittstutzen 4 gleichzeitig eintretende, die gelöste Gaskomponente enthaltende Flüssigkeit gelangt über den z.B. als Sprühvorrichtung ausgestalteten Flüssigkeitsverteiler 41 als disperse Phase auf die Fläche der sich bewegenden Füllung.

Gas und Flüssigkeit durchströmen die Anlage im Gegenstrom.

Die diskreten Füllkörper der sich infolge der Fluidisation in einer intensiven Bewegung befindenden Füllung 6 - die z.B. einfache Kugeln oder mit Kanten ausgestaltete kleine Prismen oder Zylinder sein können - zerkleinern, scheren und erneuern den an ihren Oberflächen vorhandenen Flüssigkeitsfilm, wodurch die Gesch windigkeit des Stoffaustausches zwischen der Flüssigkeits- und der Gasphase, und damit die Wirksamkeit der Desorption bedeutend erhöht werden.

Die durch die Anlage strömende Gasphase verläßt das System über den Gasabführstutzen, währen die gasfreie Flüssigkeitsphase über den das Entweichen der Gasphase verhindernden, zu diesem Zweck ausgestalteten Flüssigkeitsverschluß 9 abgelassen wird.

Aufgrund der im Laufe von Untersuchungen gewonnenen Erfahrungen kann festgestellt werden, daß die Verwendung der sich in einem Fluidisationszustand befindenden Füllungen als Erfolg der vorherbeschriebenen Tätigkeit neben der Erhöhung der Geschwindigkeit der Stoffübergabe auch mit dem Vorteil verbunden ist, daß die Änderung der Belastung innerhalb eines weiten Bereichs, praktisch bei einem konstanten Druckabfall, mit niedrigeren Betriebskosten realisiert werden kann, als bei den traditionellen Füllkörperkolonnen mit einem stationären Füllbett.

Es wurde beobachtet, daß in gewissen Fällen bei der Anwendung von Fluidisierungsfüllungen eine Rückmischung in axialer Richtung auftreten kann, die das Maß der Stoffübergabe des in der Flüssigkeit gelösten Gases beeinträchtigt. Diese Erscheinung kann auf zweierlei Weisen eliminiert werden. Bei der einen Ausführungsform wird das sich im Fluidisationszustand befindende Bett in der axialen Richtung mit Hilfe von Trenngittern 7 in Strecken unterteilt, die die Rückmischung verhindern. Bei der anderen Ausführungsform wird die Gliederung des Bettes in der Axialrichtung durch unterschiedliche Dimensionen und/oder Dichten der kugelförmigen Füllkörper vorgenom men.

Die aus den kugelförmigen Füllkörpern von unterschiedlicher Dichte und Dimension bestehenden Gruppen bilden in dem Mischraum gut voneinander getrennte Schichten.

Die Leistung kann weiter erhöht werden, wenn für die in Flüssigkeiten schwer lösbaren Gase - wie z.B. $CO_2$ oder Luft - über den Eintrittsstutzen 8 an der Decke der kolonne ein flächenaktives Benetzungsmittel in den Fluidisationsraum eindosiert wird.

## Patentansprüche

1. Verfahren zur Desorption eines schwerlösbaren Gases aus einer Flüssigkeit, bei welchem in einer Gegenstromkolonne (1) die Flüssigkeit von oben her auf eine Füllung (6) aus diskreten Füllkorpern verteilt wird, die mittels eines Gastromes, der von unterhalb der Füllung (6) her zugeführt wird, fluidisiert gehalten wird, wobei in der Füllung (6) mehrere unterschiedliche fluidisierte Füllkörperschichten ausgebildet werden, deren gegenseitige Rückmischung entweder durch Trenngitter (7) oder durch Ausbildung der Füllkörperschichten aus fluidisierbaren Füllkörpern unterschiedlicher Dichte und/oder Dimension verhindert wird.

2. Verfahren nach Anspruch 1, bei welchem Füllkörper mit der Form et- nes Prismas, eines Zylinders oder einer kugel verwendet werden.

3. Verfahren nach Anspruch 1 oder 2, bei welchem der Flüssigkeit ein flächenaktives Benetzungsmittel zugeführt wird.

## Claims

1. Process for the desorption of a sparingly soluble gas from a liquid, in which, in a countercurrent column (1), the liquid is distributed from above to a filling (6) which comprises discrete filling elements and is kept in a fluidised state by means of a gas current supplied from below the filling (6), there being formed in the filling (6) a plurality of different fluidised filling element layers, the mutual intermixing of which is prevented either by separating grids (7) or by the filling element layers being constructed from fluidisable filling elements of different densities and/or dimensions.

2. Process according to claim 1 in which there are used filling elements of prismatic, cylindrical or spherical shape.

3. Process according to claim 1 or 2 in which a surface-active wetting agent is supplied to the liquid.

## Revendications

1.- Procédé de désorption d'un gaz de faible solubilité à partir d'un liquide, dans lequel on répartit à partir du haut, dans une colonne à contre-courant (1), le liquide sur un garnissage (6) formé de corps de remplissage discrets, en maintenant ledit garnissage à l'état fluidisé à l'aide d'un courant de gaz amené par le bas au garnissage (6), cependant qu'on forme dans ce garnissage (6) une pluralité de couches de corps de remplissage fluidisées dont on empêche le mélange à nouveau (remélange) soit par des grilles séparatrices (7) soit en formant lesdites couches de corps de remplissage à l'aide de corps de remplissage fluidisables de densités et/ou de dimensions différentes.

2.- Procédé selon la revendication 1, dans lequel on utilise des corps de remplissage de forme prismatique, cylindrique ou sphérique.

3.- Procédé selon la revendication 1 ou 2, dans lequel on ajoute au liquide un agent mouillant tensio-actif.